(19) **Europäisches Patentamt** / **European Patent Office** / **Office européen des brevets**

(11) **EP 4 692 961 A1**

(12) **EUROPEAN PATENT APPLICATION**

(43) Date of publication:
**11.02.2026 Bulletin 2026/07**

(21) Application number: **25189266.7**

(22) Date of filing: **14.07.2025**

(51) International Patent Classification (IPC):
**G05B 13/04** $^{(2006.01)}$

(52) Cooperative Patent Classification (CPC):
**G05B 13/048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.08.2024 US 202418795227**

(71) Applicant: **Honeywell International Inc.**
**Charlotte, NC 28202 (US)**

(72) Inventors:
• **HALLIHOLE, Sriram**
**Charlotte, 28202 (US)**

• **WEBB, Christopher**
**Charlotte, 28202 (US)**
• **HART, Peter**
**Charlotte, 28202 (US)**
• **RAVIPRAKASH, Kiran**
**Charlotte, 28202 (US)**
• **MANJUNATHA, Rajeev Naduthota**
**Charlotte, 28202 (US)**

(74) Representative: **Haseltine Lake Kempner LLP**
**Cheapside House**
**138 Cheapside**
**London EC2V 6BJ (GB)**

(54) **A METHOD AND SYSTEM TO ENHANCE AN OPERATION OF A PROCESS PLANT**

(57) The present disclosure relates to a method of enhancing an operation of a process plant. The method comprises configuring a primary controller to be connected to one or more secondary controllers via conjoint variables and sending at least one optimization call to the one or more secondary controllers, where the conjoint variables in the primary controller has a PWO limit and conjoint variables in the one or more secondary controllers has an advanced process control (APC) limit. A proxy limit is received from the one or more secondary controllers in response to the at least one optimization call and the APC limit and received proxy limit is analysed to determine an optimal target. The optimal target is sent to the one or more secondary controllers, which are instructed to adjust the APC limit to the optimal target.

Figure 1

**Description**

<u>**TECHNICAL FIELD**</u>

The present disclosure relates generally to industrial process control and automation systems. More particularly, the present disclosure relates to a method and system to enhance an operation of a process plant.

<u>**BACKGROUND**</u>

Processing facilities such as a process plant is an industrial facility where raw materials are processed into finished products through a series of chemical, physical, or biological transformations. These process plants are commonly found in sectors like petrochemical, pharmaceutical, food and beverage, and water treatment. The operation of the process plants involves several key steps and considerations, typically designed to transform raw materials into desired products efficiently and safely. The first step in the operation of the process plant is raw material handling, where raw materials are brought into the process plant and stored in designated areas. These materials could be solids, liquids, or gases depending on the process. The raw materials undergo various processing steps depending on the desired end product. This may include mixing, reaction, heating, cooling, separation (such as distillation or filtration), and other chemical or physical transformations.

To produce the end product, the process plants are equipped with specialized machinery like reactors, heat exchangers, pumps, compressors, and valves. These machines are used to carry out specific operations efficiently and safely. The process plants also use sophisticated control systems (such as Distributed Control Systems, DCS) to monitor and regulate various parameters like temperature, pressure, flow rates, and composition to ensure product quality and safety. Therefore, it becomes essential to do regular maintenance of equipment and machinery to ensure smooth operation and prevent breakdowns that could disrupt production.

Smooth operation of the process plant also includes optimizing the process plant by integrating advanced technologies to achieve maximum efficiency and productivity. Some of the strategies to enhance the operation of the process plant are advanced process control (APC) and automation model predictive control (MPC). These strategies use real-time data and predictive models to anticipate future process behaviour and make optimal adjustments which improves stability, reduces variability, and yields higher output.

Within this industry, the process plant has multiple process units performing individual operations. Tracking real-time benefits and lost opportunities of the process plant/plant-wide optimizer (PWO) in conjunction with the individual process units/advanced process control (APC) is a challenging task. Lost opportunity in the process plant can be due to several reasons, such as unplanned downtime caused by an equipment failure, power outages, or unexpected maintenance or due to incorrect temperature settings, or inadequate raw material usage, which leads to suboptimal output. This results in higher energy consumption, increased waste, and lower product quality.

Generally, the functioning of the process plant gets hampered due to reduced performance of the process plant/PWO and the process units/APC's, which happens due to several reasons. such as constrained APC limit, continued use of old, faulty and degraded equipment's, and non-optimal working of controllers installed at various levels in the process plant. A thorough examination of PWO data and APC data is necessary to reduce the losses occurring in the process plant and to minimize the lost opportunity of the process plant. It requires detailed analysis of historical information as well as the current working conditions of both the PWO and APC's. Thus, there is a need for enhancing the operations of the process plant.

<u>**SUMMARY**</u>

The present disclosure provides a method and system to enhance the operation of a process plant.

In an embodiment of the present disclosure, a method of enhancing an operation of a process plant is provided. The method comprises configuring a primary controller in the process plant to be connected to one or more secondary controllers in the process plant via conjoint variables, where the conjoint variables in the primary controller has a plant-wide optimizer (PWO) limit and the conjoint variables in the one or more secondary controllers has an advanced process control (APC) limit. The primary controller sends at least one optimization call to the one or more secondary controllers and receives a proxy limit from the one or more secondary controllers in response to the at least one optimization call, where the proxy limit is determined based on the APC limit and configured to notify the primary controller of a constraint and optimal operating condition available by the one or more secondary controllers. The primary controller analyzes the APC limit and the received proxy limit from the one or more secondary controllers and determines an optimal target, where the optimal target is based on current operating conditions of the one or more secondary controllers, and sends the optimal target to the one or more secondary controllers and further instructs the one or more secondary controllers to adjust the APC limit to the optimal target.

In some embodiments, the PWO limit and the APC limit are entered by an operator.

In some embodiments, the one or more secondary controllers manage individual APC units of the process plant.

In some embodiments, the individual APC units of the process plant are connected to the primary controller using the proxy limit, the conjoint variables, and the optimal target.

In some embodiments, the proxy limit of the one or more secondary controllers is obtained based on an ideal limit entered by the operator indicative of a preference for operation of the process plant.

In some embodiments, the proxy limit identifies operational constraints of the one or more secondary controllers.

In some embodiments, the conjoint variables, the APC limit, the PWO limit, the proxy limit, and an ideal proxy limit are utilized to compute the plant wide lost opportunity.

In some embodiments, a planning model is obtained for the process plant at the primary controller.

In some embodiments, the proxy limit identifies an extent to which one or more process variables controlled by the one or more secondary controllers are adjustable without violating a process variable constraint.

In yet another embodiment, a system to enhance the operation of a process plant is disclosed. The system includes a primary controller and one or more secondary controllers wherein the primary controller comprises a memory and a processor which configures the primary controller in the process plant to be connected to the one or more secondary controllers in the process plant via conjoint variables, where the conjoint variables in the primary controller have a plant-wide optimizer (PWO) limit and the conjoint variables in the one or more secondary controllers has an advanced process control (APC) limit. The primary controller sends at least one optimization call to the one or more secondary controllers and receives a proxy limit from the one or more secondary controllers in response to the at least one optimization call. The proxy limit is determined based on the APC limit and notifies the primary controller of a constraint and optimal operating condition available by the one or more secondary controllers. The primary controller analyzes the APC limit and the received proxy limit from the one or more secondary controllers and determines an optimal target, wherein the optimal target is based on current operating conditions of the one or more secondary controllers, and sends the optimal target to the one or more secondary controllers and further instructs the one or more secondary controllers to adjust the APC limit to the optimal target.

In another embodiment, a non-transitory computer-readable medium having stored thereon computer-readable instructions is disclosed. The computer-readable instructions, when executed by a processor, cause the processor to enhance an operation of a process plant by configuring a primary controller in the process plant to be connected to the one or more secondary controllers in the process plant via conjoint variables. The conjoint variables in the primary controller has a plant-wide optimizer (PWO) limit and the conjoint variables in the one or more secondary controllers has an advanced process control (APC) limit. The computer-readable instructions further cause the processor to send at least one optimization call to the one or more secondary controllers and receive a proxy limit from the one or more secondary controllers in response to the at least one optimization call, wherein the proxy limit is determined based on the APC limit and configured to notify the primary controller of a constraint and optimal operating condition available by the one or more secondary controller. The computer-readable instructions further cause the processor to analyze the APC limit and the received proxy limit from the one or more secondary controllers and determines an optimal target, wherein the optimal target is based on current operating conditions of the one or more secondary controllers. The computer-readable instructions further cause the processor to send the optimal target to the one or more secondary controllers and further instructs the one or more secondary controllers to adjust the APC limit to the optimal target.

The systems and methods of the present disclosure provides actionable insights to maximize the utilization and performance of the entire plant, enabling efficient operation across all the APC units.

This solution helps in real time monitoring of the process plant and the APC units and further helps in identifying corrective actions to be taken to maximize the benefits.

This summary is provided to describe select concepts in a simplified form that are further described in the detailed description. This summary is not intended to identify key or essential features of the claimed subject matter, nor is it intended to be used as an aid in determining the scope of the claimed subject matter.

These and other obj ectives and advantages of the present disclosure will become more apparent when reference is made to the following description.

## BRIEF DESCRIPTION OF THE DRAWINGS

To further clarify advantages and features of the present disclosure, a more particular description of the disclosure will be rendered by reference to specific embodiments thereof, which is illustrated in the appended drawings. It is appreciated that these drawings depict only typical embodiments of the disclosure and are therefore not to be considered limiting of its scope. The disclosure will be described and explained with additional specificity and detail with the accompanying drawings in which:

Figure 1 illustrates an example of an industrial process control and automation system according to an embodiment of the disclosure;

**Figure 2** represents a yield-based planning model according to an embodiment of the disclosure;

**Figure 3** illustrates a model predictive control (MPC) model according to an embodiment of the disclosure;

**Figure 4A** illustrates a block diagram depicting communication between controllers in a process plant according to an embodiment of the disclosure;

**Figure 4B** illustrates a distillate flowsheet according to an embodiment of the disclosure;

**Figure 5** illustrates a diagram depicting discretization of limits according to an embodiment of the disclosure;

**Figure 6** illustrates the flow chart for a method to enhance an operation of the process plant by optimizing the operation using controllers according to an embodiment of the disclosure; and

**Figure 7** illustrates a schematic diagram of a communication apparatus according to an embodiment of the disclosure.

Further, skilled artisans will appreciate that elements in the drawings are illustrated for simplicity and may not have necessarily been drawn to scale. For example, the flow charts illustrate the method in terms of the most prominent steps involved to help improve understanding of aspects of the present disclosure. Furthermore, in terms of the construction of the apparatus, one or more components of the apparatus may have been represented in the drawings by conventional symbols, and the drawings may show only those specific details that are pertinent to understanding the embodiments of the present disclosure so as not to obscure the drawings with details that will be readily apparent to those of ordinary skill in the art having the benefit of the description herein.

## DETAILED DESCRIPTION

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

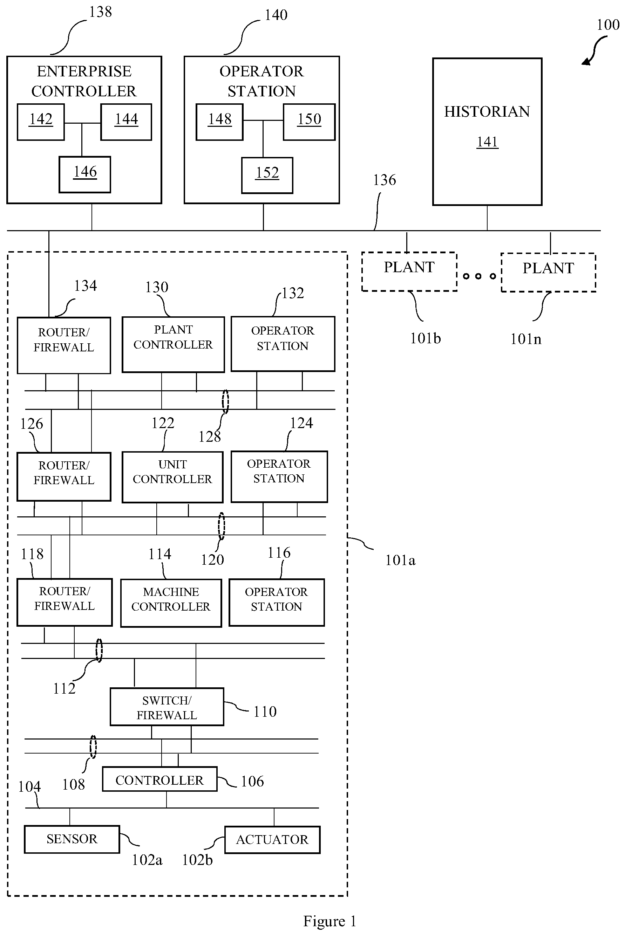

For the purpose of promoting an understanding of the principles of the disclosure, reference will now be made to the embodiment illustrated in the Figures 1 through 7 and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

Embodiments of this disclosure provides real-time application insights that enables an operator to take timely corrective measures. The innovation continuously analyzes and estimates potential earnings lost owing to suboptimal operating conditions across a process plant, including individual APC units. This gives plant manager's real-time insights into the difference between current operations and optimal circumstances for profit maximization. In some embodiments, the APC unit may be a process unit or a sub-unit.

The disclosed embodiments provide a solution to minimize a lost opportunity and maximize the benefits and optimize the operation of the process plant. A primary controller having an embedded plant wide optimizer (PWO), controls the working of the entire process plant and communicates with the one or more secondary controllers installed at the APC unit level, which oversees only the individual units.

**Figure 1** illustrates an example of an industrial process control and automation system 100 according to this disclosure. As shown in Figure 1, the industrial process control and automation system 100 (*hereafter referred as 'system*

*100*') includes various components that facilitate production or processing of at least one product or other materials. For instance, the system 100 is used here to facilitate control over components in one or multiple process plant 101a-101n. Each process plant 101a-101n represents one or more processing facilities (or one or more portions thereof), such as one or more manufacturing facilities for producing at least one product or other material. In general, each process plant 101a-101n may implement one or more processes and can individually or collectively be referred to as a process system. A process system generally represents any system or portion thereof configured to process one or more products or other materials in some manner.

The system 100 is implemented using the Purdue model of process control. In the Purdue model, "Level 0" may include one or more sensors l02a and one or more actuators l02b. The sensors l02a and actuators l02b represent components in a process system that may perform any of a wide variety of functions. For example, the sensors l02a could measure a wide variety of characteristics in the process system, such as temperature, pressure, flow rate, or a voltage transmitted through a cable. Also, the actuators l02b could alter a wide variety of characteristics in the process system. The sensors l02a and actuators l02b could represent any other or additional components in any suitable process system. Each of the sensors l02a includes any suitable structure for measuring one or more characteristics in a process system. Each of the actuators l02b includes any suitable structure for operating on or affecting one or more conditions in a process system.

At least one network 104 is coupled to the sensors l02a and actuators l02b. The network 104 facilitates interaction with the sensors l02a and actuators l02b. For example, the network 104 could transport measurement data from the sensors l02a and provide control signals to the actuators l02b. The network 104 could represent any suitable network or combination of networks. As particular examples, the network 104 could represent an Ethernet network, an electrical signal network (such as a HART or FOUNDATION FIELDBUS (FF) network), a pneumatic control signal network, or any other or additional type(s) of network(s).

In the Purdue model, "Level 1" may include one or more controllers 106, which are coupled to the network 104. Among other things, each controller 106 may use the measurements from one or more sensors l02a to control the operation of one or more actuators l02b. For example, a controller 106 could receive measurement data from one or more sensors l02a and use the measurement data to generate control signals for one or more actuators l02b. Multiple controllers 106 could also operate in redundant configurations, such as when one controller 106 operates as a master controller while another controller 106 operates as a backup controller (which synchronizes with the master controller and can take over for the master controller in the event of a fault with the master controller). Each controller 106 includes any suitable structure for interacting with one or more sensors l02a and controlling one or more actuators l02b. Each controller 106 could, for example, represent a multivariable controller, such as a Robust Multivariable Predictive Control Technology (RMPCT) controller or other type of controller implementing model predictive control (MPC) or other advanced predictive control (APC). As a particular example, each controller 106 could represent a computing device running a real-time operating system.

Two networks 108 are coupled to the controllers 106. The networks 108 facilitate interaction with the controllers 106, such as by transporting data to and from the controllers 106. The networks 108 could represent any suitable networks or combination of networks. As particular examples, the networks 108 could represent a pair of Ethernet networks or a redundant pair of Ethernet networks, such as a FAULT TOLERANT ETHERNET (FTE) network from HONEYWELL INTERNATIONAL INC.

At least one switch/firewall 110 couples the networks 108 to two networks 112. The switch/firewall 110 may transport traffic from one network to another. The switch/firewall 110 may also block traffic on one network from reaching another network. The switch/firewall 110 includes any suitable structure for providing communication between networks, such as a HONEYWELL CONTROL FIREWALL (CF9) device. The networks 112 could represent any suitable networks, such as a pair of Ethernet networks or an FTE network.

In the Purdue model, "Level 2" may include one or more machine-level controllers 114 coupled to the networks 112. The machine-level controllers 114 perform various functions to support the operation and control of the controllers 106, sensors l02a, and actuators l02b, which could be associated with a particular piece of industrial equipment (such as a boiler or other machine). For example, the machine- level controllers 114 could log information collected or generated by the controllers 106, such as measurement data from the sensors l02a or control signals for the actuators l02b. The machine-level controllers 114 could also execute applications that control the operation of the controllers 106, thereby controlling the operation of the actuators l02b. In addition, the machine-level controllers 114 could provide secure access to the controllers 106. Each of the machine-level controllers 114 includes any suitable structure for providing access to, control of, or operations related to a machine or other individual piece of equipment. Each of the machine-level controllers 114 could, for example, represent a server computing device running a MICROSOFT WINDOWS operating system. Although not shown, different machine-level controllers 114 could be used to control different pieces of equipment in a process system (where each piece of equipment is associated with one or more controllers 106, sensors l02a, and actuators l02b).

One or more operator stations 116 are coupled to the networks 112. The operator stations 116 represent computing or communication devices providing the operator access to the machine-level controllers 114, which could then provide the operator access to the controllers 106 (and possibly the sensors l02a and actuators l02b).As particular examples, the operator stations 116 could allow the operators to review the operational history of the sensors l02a and actuators l02b using information collected by the controllers 106 and/or the machine-level controllers 114. The operator stations 116 could also allow the operators to adjust the operation of the sensors l02a, actuators l02b, controllers 106, or machine-level controllers 114. In addition, the operator stations 116 could receive and display warnings, alerts, or other messages or displays generated by the controllers 106 or the machine-level controllers 114. Each of the operator stations 116 includes any suitable structure for supporting the operator access and control of one or more components in the system 100. Each of the operator stations 116 could, for example, represent a computing device running a MICROSOFT WINDOWS operating system.

At least one router/firewall 118 couples the networks 112 to two networks 120. The router/firewall 118 includes any suitable structure for providing communication between networks, such as a secure router or combination router/firewall. The networks 120 could represent any suitable networks, such as a pair of Ethernet networks or an FTE network.

In the Purdue model, "Level 3" may include one or more unit-level controllers 122 coupled to the networks 120. Each unit-level controller 122 is typically associated with a unit in a process system, which represents a collection of different machines operating together to implement at least part of a process. The unit-level controllers 122 perform various functions to support the operation and control of components in the lower levels. For example, the unit-level controllers 122 could log information collected or generated by the components in the lower levels, execute applications that control the components in the lower levels, and provide secure access to the components in the lower levels. Each of the unit-level controllers 122 includes any suitable structure for providing access to, control of, or operations related to one or more machines or other pieces of equipment in a process unit. Each of the unit-level controllers 122 could, for example, represent a server computing device running a MICROSOFT WINDOWS operating system. Although not shown, different unit-level controllers 122 could be used to control different units in a process system (where each unit is associated with one or more machine-level controllers 114, controllers 106, sensors l02a, and actuators l02b).

Access to the unit-level controllers 122 may be provided by one or more operator stations 124. Each of the operator stations 124 includes any suitable structure for supporting the operator access and control of one or more components in the system 100. Each of the operator stations 124 could, for example, represent a computing device running a MICROSOFT WINDOWS operating system.

At least one router/firewall 126 couples the networks 120 to two networks 128. The router/firewall 126 includes any suitable structure for providing communication between networks, such as a secure router or combination router/firewall. The networks 128 could represent any suitable networks, such as a pair of Ethernet networks or an FTE network.

In the Purdue model, "Level 4" may include one or more plant-level controllers 130 coupled to the networks 128. Each plant-level controller 130 is typically associated with one of the plants 101a-101n, which may include one or more process units that implement the same, similar, or different processes. The plant-level controllers 130 perform various functions to support the operation and control of components in the lower levels. As particular examples, the plant-level controller 130 could execute one or more manufacturing execution system (MES) applications, scheduling applications, or other or additional plant or process control applications. Each of the plant-level controllers 130 includes any suitable structure for providing access to, control of, or operations related to one or more process units in a process plant. Each of the plant-level controllers 130 could, for example, represent a server computing device running a MICROSOFT WINDOWS operating system.

Access to the plant-level controllers 130 may be provided by one or more operator stations 132. Each of the operator stations 132 includes any suitable structure for supporting the operator access and control of one or more components in the system 100. Each of the operator stations 132 could, for example, represent a computing device running a MICROSOFT WINDOWS operating system.

At least one router/firewall 134 couples the networks 128 to one or more networks 136. The router/firewall 134 includes any suitable structure for providing communication between networks, such as a secure router or combination router/firewall. The network 136 could represent any suitable network, such as an enterprise-wide Ethernet or other network or all or a portion of a larger network (such as the Internet).

In the Purdue model, "Level 5" may include one or more enterprise-level controllers 138 coupled to the network 136. Each enterprise-level controller 138 is typically able to perform planning operations for multiple plants 101a-101n and to control various aspects of the plants 101a-101n. The enterprise-level controllers 138 can also perform various functions to support the operation and control of components in the plants 101a-101n. As particular examples, the enterprise-level controller 138 could execute one or more order processing applications, enterprise resource planning (ERP) applications, advanced planning and scheduling (APS) applications, or any other or additional enterprise control applications. Each of the enterprise-level controllers 138 includes any suitable structure for providing access to, control of, or operations related to the control of one or more plants. Each of the enterprise-level controllers 138 could, for example, represent a server computing device running a MICROSOFT WINDOWS operating system. In this document, the term "enterprise" refers to an organization having one or more plants or other processing facilities to be managed. Note that if a single plant 101a is to be managed, the functionality of the enterprise-level controller 138 could be incorporated into the plant-level controller 130.

Access to the enterprise-level controllers 138 may be provided by one or more operator stations 140. Each of the operator stations 140 includes any suitable structure for supporting the operator access and control of one or more components in the system 100. Each of the operator stations 140 could, for example, represent a computing device running a MICROSOFT WINDOWS operating system.

Various levels of the Purdue model can include other components, such as one or more databases. The database(s) associated with each level could store any suitable information associated with that level or one or more other levels of the system 100. For example, a historian 141 can be coupled to the network 136. The historian 141 could represent a component that stores various information about the system 100. The historian 141 could, for instance, store information used during production scheduling and optimization. The historian 141 represents any suitable structure for storing and facilitating retrieval of information. Although shown as a single centralized component coupled to the network 136, the historian 141 could be located elsewhere in the system 100, or multiple historians could be distributed in different locations in the system 100.

In particular embodiments, the various controllers and the operator stations in Figure 1 may represent computing devices. For example, each of the controllers could include one or more processing devices 142 and one or more memories 144 for storing instructions and data used, generated, or collected by the processing device(s) 142. Each of the controllers could also include at least one network interface 146, such as one or more Ethernet interfaces or wireless transceivers. Also, each of the operator stations could include one or more processing devices 148 and one or more memories 150 for storing instructions and data used, generated, or collected by the processing device(s) 148. Each of the operator stations could also include at least one network interface 152, such as one or more Ethernet interfaces or wireless transceivers.

In accordance with this disclosure, various components of the system 100 support a process for providing cost of the lost opportunity to the operators in real time using advanced process control in the system 100. For example, one or more of the interfaces 146, 152 could indicate different aspects of a system where the process controls are not operating with maximum efficiency, as described in greater detail below.

Although Figure 1 illustrates one example of an industrial process control and automation system 100, various changes may be made to Figure 1. For example, a control system could include any number of sensors, actuators, controllers, servers, operator stations, and networks. Also, the makeup and arrangement of the system 100 in Figure 1 is for illustration only. Components could be added, omitted, combined, or placed in any other suitable configuration according to particular needs. Further, particular functions have been described as being performed by particular components of the system 100. This is for illustration only. In general, process control systems are highly configurable and can be configured in any suitable manner according to particular needs.

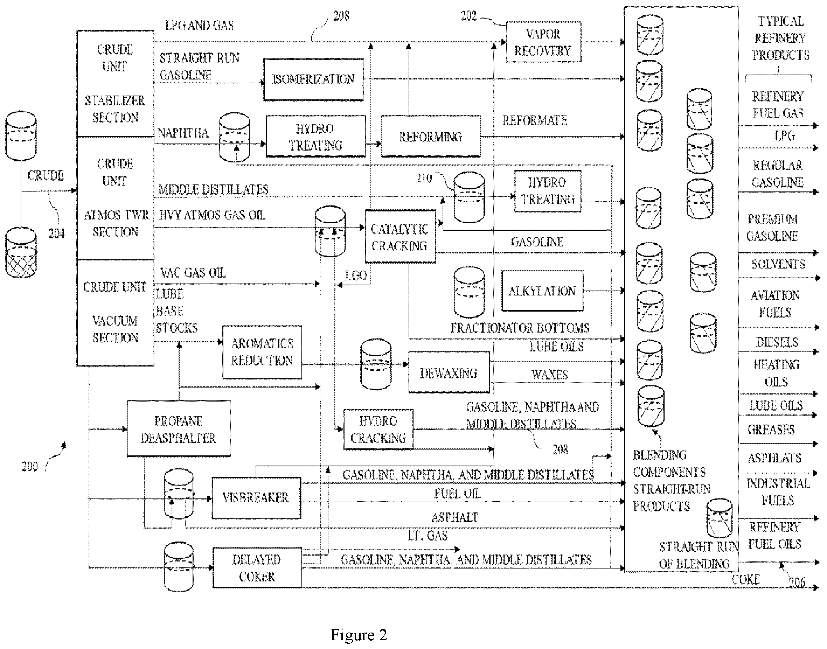

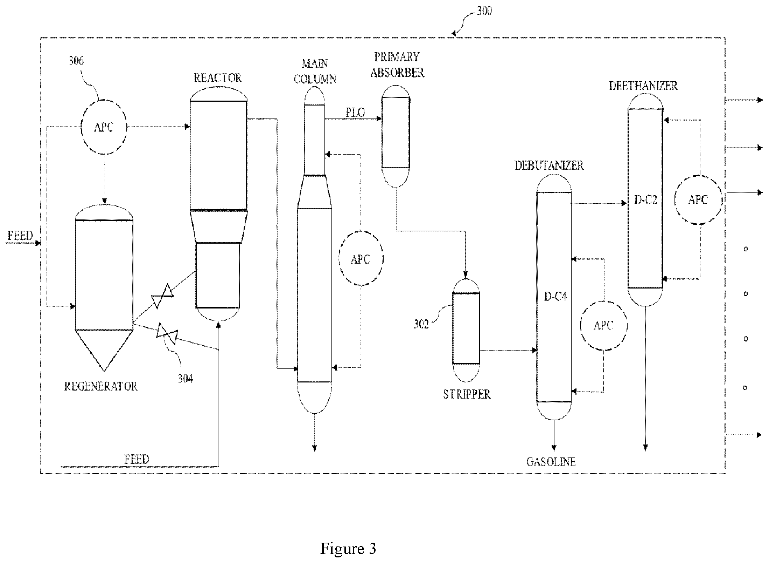

**Figure 2** represents a yield-based planning model according to an embodiment of the disclosure. Consider an industrial plant having multiple process units. At a high level, the overall material, component, and energy balances among all the units should be established. At a low level, each unit should be properly controlled to ensure safety in the plant and smooth efficient operation of the unit. Planning and MPC models are an example of a multiscale model pair that could be used to solve multi-level problems in a cascaded MPC architecture. Figures 2 and 3 illustrate example planning and MPC models used to support a cascaded MPC approach in an industrial process control and automation system according to this disclosure. In particular, Figure 2 represents a yield-based planning model 200, and Figure 3 represents an MPC model 300.

As shown in Figure 2, the planning model 200 identifies multiple units 202, which generally operate to convert one or more input streams 204 of feed materials into one or more output streams 206 of processed materials. In this example, the units 202 denote components in an oil and gas refinery that convert a single input stream 204 (crude oil) into multiple output streams 206 (different refined oil/gas products). Various intermediate products 208 are created by the units 202, and one or more storage tanks 210 could be used to store one or more of the intermediate products 208. As shown in Figure 3, the MPC model 300 identifies multiple components 302 of a single unit. Various valves and other actuators 304 can be used to adjust operations within the unit, and various APCs and other controllers 306 can be used to control the actuators within the unit.

In general, a planning model 200 looks at an entire plant (or portion thereof) with a "bird's eye" view and thus represents individual units on a coarse scale. The planning model 200 focuses on the inter-unit steady-state relationships pertaining to unit productions, product qualities, material and energy balances, and manufacturing activities inside the plant. The planning model 200 is typically (but not always) composed of process yield models and product quality properties. The planning model 200 can be constructed from a combination of various sources, such as planning tools, scheduling tools, yield validation tools and/or historical operating data. The MPC model 300, *however,* represents at least one unit on a finer scale. An MPC model 300 focuses on the intra-unit dynamic relationships between controlled variables (CVs), manipulated variables (MVs), and disturbance variables (DVs) pertaining to the safe, smooth, and efficient operation of a unit. The time scales of the two models 200, 300 are also different. The MPC model's time horizon typically ranges from minutes to hours, while the planning model's time horizon typically ranges from days to months. Note that a "controlled variable" generally denotes a variable whose value is controlled to be at or near a set point or within a desired range, while a "manipulated variable" generally denotes a variable that is adjusted in order to alter the value of at least one controlled variable. A "disturbance variable" generally denotes a variable whose value can be considered but not controlled or adjusted. The planning model 200 often can and should exclude non-production-related or non-economically-related variables, such as pressures, temperatures, tank levels, and valve openings within each unit. Instead, the planning model 200 can reduce a process unit to one or several material or energy yield vectors. The MPC model 300, *on the other hand,* typically includes all of the operating variables for control purposes in order to help ensure the safe and effective operation of a unit. As a result, the MPC model 300 includes many more variables for a unit compared to the planning model 200. As a specific example, the MPC model 300 for an oil refinery's Fluidized Catalytic Cracking Unit (FCCU) could contain about 100 CVs (outputs) and 40 MVs (inputs). The planning model 200 of the same unit could focus only on key causal relationships between the feed quality and operating modes (as inputs) and the FCCU product yield and quality (as outputs), so the planning model 200 could have as few as three or four inputs and ten outputs. This variable difference has conventionally been a barrier to effectively integrating multi-level solutions.

There are several advantages of using a coarse-scale planning model 200. For example, the plant wide economic optimization can be compactly and clearly formulated using the planning model 200 without getting entangled with possibly-obscuring details inside any single process unit. Also, a divide-and-conquer approach can be employed to solve a high-level optimization problem first and then find a way to pass the solution down to each unit.

While a compact well-built planning model 200 makes a planning problem easy to set up, clear to view, and quick to solve, it comes with a drawback-it has no visibility of the detailed variables inside any unit. Although many of these detailed variables may have little to do with high-level production planning, a small subset usually does. When the planning model 200 has no visibility inside any lower-level unit, it cannot guarantee that its solution, optimal or not, will honour lower-level constraints of all units. This is one reason why a conventional planning solution often needs to be manually translated or revised to accommodate operating constraints inside the units, and a significant profit margin can be lost in the translation. The same can be said for a scheduling solution if it uses the yield-based planning model 200 that is at a coarse scale.

From a holistic perspective, an optimization or control problem formulated with a high-level yield-based planning model 200 could benefit from low-level MPC models 300. The rationale is that the details used for guaranteeing constraint satisfaction in a unit are typically already in the unit's MPC model 300, although these details are not necessarily organized in the right model format. Ideally, the MPC model 300 can be used to supplement the details of a unit's constraints for planning on an as-needed basis. The cascaded MPC approach described below provides a structural framework in which MPC models can be effectively used to supply low-level fine-scale model information to high-level coarse-scale plantwide optimization formulation or control information.

From a plantwide perspective, control and planning are often coupled. Planning typically relies on control to establish a feasible region for optimization, while control typically relies on planning to coordinate units and run an entire plant at its highest possible profitable operating point. Planning therefore often depends on MPC controllers to push constraints inside each unit to create a bigger feasible region for plantwide optimization. Meanwhile, MPC controllers often depend on guidance from planning before the MPC controllers know which constraints are truly plantwide bottlenecks and should thus be pushed and which constraints are not and could remain inactive. These two solution layers therefore co-depend on each other and should be treated simultaneously. One way to solve this coupled problem is to design the control and plantwide optimization jointly. Since each MPC controller has an embedded economic optimizer, a single large plantwide MPC controller that performs both plantwide optimization and unit-level MPC control could be devised. However, such a monolithic all-or-nothing MPC solution has various drawbacks. One challenge of any joint design approach has been simultaneously providing decentralized controls at lower levels and centralized optimization at higher levels.

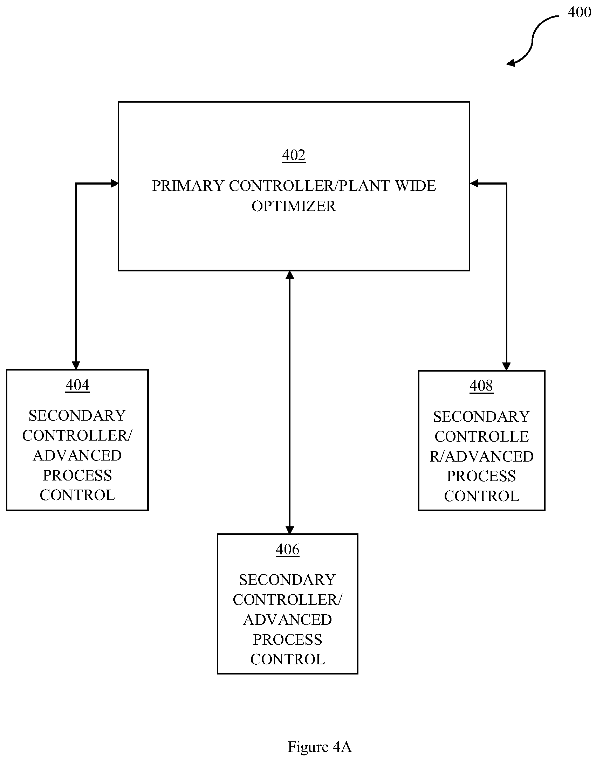

**Figure 4A** illustrates a block diagram showing communication between controllers used in the process plant environment. A controller in the context of technology and engineering may refer to various devices or software components responsible for managing and directing operations within a system.

The controller generally functions in the field of process control by regulating the processes to ensure they operate within desired parameters. For example, a thermostat in a heating, ventilation, and air conditioning (HVAC) system controls the temperature by switching the heating or cooling system on and off.

In the field of input/output control, the controllers manage data exchange between a system's internal components and external devices. For example, a USB controller in a computer manages communication between the CPU and USB devices like keyboards, mice, and external drives.

In the field of network control, the controllers manage network traffic and ensure data packets are transmitted and received correctly. For example, a network router directs data packets between computers on a local network and external networks, such as the internet.

In the field of access control, the controllers manage the operator access to resources and ensure security protocols are followed. For example, an RFID card reader at a secure facility controls access by verifying the credentials of individuals entering the premises.

In the field of input acquisition, the controllers begin by acquiring inputs from various sensors, the operator interfaces, or other input devices. These inputs provide the necessary data to understand the current state of the system. For example, in a temperature control system, the controller receives input from a temperature sensor.

In the field of processing and decision making, the controller processes the input data using predefined algorithms, rules, or control logic to determine the appropriate response or action. This stage may involve comparing the current state with a desired set point and calculating the necessary adjustments. For example, the temperature control system compares the current temperature with the desired set point to determine whether to activate the heating or cooling system.

In the field of output generation, based on the processing results, the controller generates outputs to actuate devices or systems. These outputs are signals or commands sent to actuators, motors, displays, or other output devices to achieve the desired effect. For example, the temperature control system sends a signal to turn on the heating element if the temperature is below the set point.

In the field of feedback and adjustment, the controllers often operate in a closed-loop system, where they continuously monitor the outputs and adjust their actions based on feedback. This feedback loop ensures that the system remains within the desired parameters and can adapt to changes in the environment or system dynamics. For example, the temperature control system continually monitors the room temperature and adjusts the heating or cooling output to maintain the set point.

In the field of communication, the controllers may communicate with other controllers, central control systems, or external devices to coordinate actions, share data, or receive remote commands. This communication can be through wired or wireless networks. For example, a building management system (BMS) controller communicates with HVAC, lighting, and security systems to optimize energy usage and maintain a comfortable environment.

In the field of error handling and safety, the controllers are designed to detect errors, malfunctions, or unsafe conditions and take appropriate actions to mitigate risks. This could involve triggering alarms, shutting down systems, or switching to a safe mode. For example, if a temperature sensor in the HVAC system fails, the controller might trigger an alarm and shut down the heating system to prevent overheating.

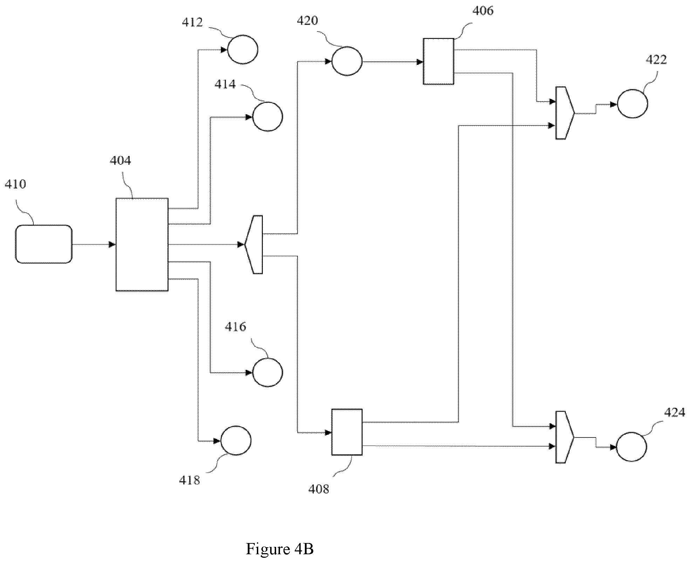

In Figure 4A, the process plant includes a primary controller 402, which majorly oversees and operates the process plant, and one or more secondary controllers such as 404, 406, and 408 which operate one of the APC units, by communicating with each other. The primary controller 402 and the secondary controllers 404, 406, 408 have common variables through which the primary controller 402 and the secondary controllers 404, 406, 408 communicate with each other. The common variables may be present in both the primary controller 402 and the secondary controllers 404, 406, 408. These common variables are also known as conjoint variables or common conjoint variables (explained later in Figure 4B). The primary controller 402 may be configured to use a planning model, such as a single-period planning model or other suitable reduced model(s), as a seed model. The primary controller 402 performs plant-wide economic optimization using its optimizer to control production inventories, manufacturing activities, or product qualities inside a plant. The primary controller 402 is cascaded on top of the secondary controllers 404, 406, 408. The secondary controllers 404, 406, 408 could, for example, represent controllers at the unit level (Level 3) of a system, and each secondary controller 404, 406, 408 provides the primary controller 402 with its operating states and constraints. Because of this, a plant-wide optimization solution from the primary controller 402 can honour all unit-level operating constraints from the secondary controllers 404, 406, 408. The phrases "plant-wide optimization" or "plant-wide control" refers to optimization or control of multiple units in an industrial facility, regardless of whether those multiple units represent every single unit in the industrial facility.

For a better perspective, referring to **Figure 4B** which is an exemplary depiction of a distillation flowsheet. A distillation flowsheet is a diagram that represents the sequence of unit operations involved in a distillation process, which is used to separate mixtures based on differences in their volatilities. It typically includes a feed system, a distillation column, a condenser, a reflux system, and product streams.

These aforesaid elements are interconnected with lines representing the flow of materials, and additional components like heat exchangers, pumps, and control systems may be included to indicate auxiliary operations. The flowsheet provides a visual summary of the distillation process, facilitating analysis, and optimization of the system.

As shown in **Figure** 4B, the secondary controllers 404, 406, 408 connected in a flow line operate each of their respective APC units. The secondary controllers 404, 406, 408 are responsible for smooth functioning of their respective APC units. The secondary controllers 404, 406, 408 do not communicate with each other and therefore, do not know the physical constraints and the optimal working conditions of other APC units.

The functionality of the secondary controllers will now be explained with respect to the secondary controller 404. The same, however, shall be applicable to other secondary controllers. The APC unit, connected with the secondary controller 404, intakes as input, a manipulated variable (MV), crude oil to process, distillate and/or refine it in the APC unit. There can be one or more than one manipulated variable (MV). There are multiple outputs of the APC unit which are utilized to produce the desired product. For example, the APC unit outputs a certain amount of crude oil, a controlled variable (CV), to produce at least one of the products, for example, Naptha.

As described in the above examples, the CV and the MV are accordingly, recorded by the secondary controller 404 working at the respective APC unit for multiple variables such as overflash flow, Heater COT, HDS feed etc. The recorded CVs and MVs of these variables are stored in a memory of the secondary controller 404.

Some or all of the MVs and CVs related to each APC unit are also present in the memory of the primary controller 402 (shown in Figure 4A). The value of the stored MVs and CVs is updated at the primary controller 402 level continuously, even for a slight change in the value of the MVs and CVs at the secondary controller 404 level. Since these variables are present in the primary controller 402 and in the secondary controller 404, they are known as common variables or conjoint variables. These common/conjoint variables are responsible for sending APC limits, physical constraints, optimal operating conditions of the APC unit from the secondary controller 404 to the primary controller 402.

Other secondary controllers 406, 408 embedded at their respective APC unit work in similar manner as described above for the secondary controller 402.

Further, the communication between the primary controller 402 and the secondary controllers 404, 406, 408 pertains to recordal, storage, and transmission of APC limit of individual APC units. The detailed information about limits has been described herein below.

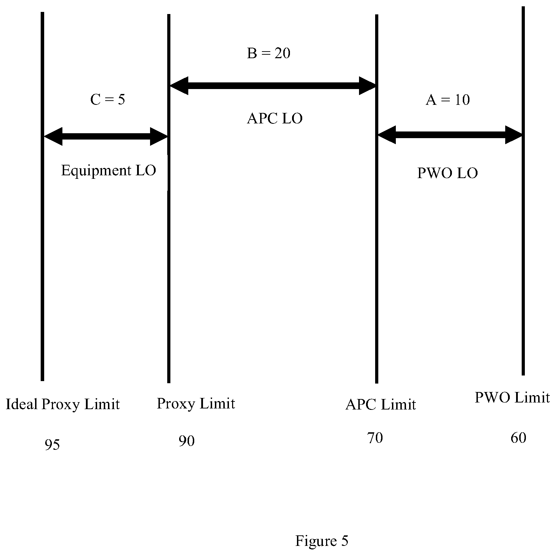

**Figure 5** illustrates discretization of the limits according to the present disclosure. The figure represents several limits used in the present disclosure. A PWO limit is a limit entered by an operator at the process plant level or at the primary controller 402 which infers the operator's intention to run the process plant at that particular limit to yield maximum result.

The Advanced process control (APC) limit is a limit entered by the operator at the APC unit level or at the secondary controllers 404, 406, 408 which infers the operator's intention to run the APC unit at that particular limit to yield maximum output from the APC unit.

A proxy limit is a limit computed based on the APC limit by the secondary controllers 404, 406, 408. The proxy limit identifies the physical constraints and optimal operating condition available with the secondary controllers 404, 406, 408 for the CVs and the MVs of the APC unit. The proxy limit helps the primary controller 402 in taking decision to optimize the working of the APC units and to further compute the lost opportunity of the process plant.

An ideal proxy limit is calculated based on an ideal limit. The ideal limit is the limit at which the operator intents to run the APC unit. However, *as mentioned above,* due to physical constraints it may not be possible to run the APC units at the ideal limit.

The PWO limit, the APC limit, the proxy limit and the ideal proxy limit together helps in optimization of the process plant which is described in detail herein below.

Referring back to **Figure** 4A, the secondary controllers 404, 406, 408 record and store the proxy limit and reflect this information to the primary controller 402 using the common/conjoint variables. The primary controller 402 analyzes the proxy limit received from the secondary controllers 404, 406, 408 and determines an optimal target for each of the APC unit. The secondary controllers 404, 406, 408 receive the optimal target for their respective APC unit via the common variables/conjoint variables. The secondary controllers 404, 406, 408 are instructed by the primary controller 402 to change the APC limit of the CVs and MVs concerned with the respective APC unit. The secondary controllers 404, 406, 408 adjusts its APC limit to the optimal target received from the primary controller 402. This mechanism optimizes the process plant.

In one of the embodiments, the PWO limit, the APC limit, the proxy limit, and the ideal proxy limit are used to calculate the lost opportunity of the process plant as described herein below.

One of the methods to calculate the lost opportunity is by using a shadow cost. The shadow cost is a derivative of a plant wide optimizer (PWO) objective function associated with a limit. Equation 1 as mentioned below, determines the shadow cost:

$$\frac{\partial f(MV)}{\partial constraint}\bigg|_{other\ constraints\ constant} = shadow\ cost \quad \text{------------- (1)}$$

wherein MV is a manipulated variable; and f(MV) is the plant wide optimizer (PWO) objective function.

The PWO objective function specified, uses the economics of the process plant for example, final product values, raw material costs and operating costs, and thus, the objective function is a good metric for the process plant overall benefit. Since, the shadow cost derived using equation 1 is a derivative term (and not the "cost" or "profit"), it needs to be multiplied by the distance that the initial limit can move, to determine the lost opportunity. The product of the shadow cost times the distance is labelled the lost opportunity. It represents a measure of the improvement of the PWO objective function (economics) associated with moving the initial limit to its new limit. Equation 2 below describes the computation formula of the lost opportunity.

$$lost\ opportunity = \frac{\partial f(MV)}{\partial constraint} \times (ideal\ limit - real\ limit) \ \text{-------------}\ (2)$$

The real limit in equation 2, used to calculate the lost opportunity, denotes that limit at which the CVs and MVs in the APC unit are currently working and are set by the operator. Ideal limit is used to specify the threshold available with the CVs and MVs to move up or down for better operation of the APC unit. Distance to the ideal limit from the real limit determines the lost opportunity. However, the lost opportunity is determined only for one of the APC units. To determine lost opportunity for the process plant, the calculated lost opportunity of the individual APC unit is added together as described in equation 3 below.

$$PWO\ lost\ opportunity = \sum lost\ opportunity \ \text{-------------}\ (3)$$

However, it is "unfair" to calculate the lost opportunity based on the ideal limit used in equation 2, as other constraints are active before the ideal limit can be reached by any of the CVs and/or MVs. The constraints may be something prescribed by law for example, manufacturing caustic soda has constraints/rules/law prescribed by the local government and the same cannot be bypassed as doing the same may attract penal consequences. Consequently, the lost opportunity for the APC unit is the difference between the PWO limit and the nearest of the three remaining limits, as shown in Figure 5.

Figure 5 describes an embodiment with a novel configuration of the PWO limit, the APC limit, the proxy limit, and the ideal proxy limit which are discretized to calculate the lost opportunity of the process plant. In Figure 5, the lost opportunity is divided into three components. The three components are a PWO lost opportunity, an APC lost opportunity, and an equipment lost opportunity. The PWO lost opportunity uses the distance from the PWO limit to the APC limit. The APC lost opportunity uses distance from APC limit to proxy limit. Lastly, the equipment lost opportunity uses the distance from proxy limit to ideal limit. The word "distance" here denotes the bandwidth or threshold available with each lost opportunity.

As shown in **Figure** 5, the distance or the threshold available with the PWO lost opportunity is A = 70 - 60 = 10. In the case of APC lost opportunity, B = 90 - 70 = 20 and in case of equipment lost opportunity, C = 95 - 90 = 5. Further, supposedly the shadow cost (D) is 500. The lost opportunity can be calculated using equation 4 below.

$$Lost\ Opportunity = (Abs(A)*D) + (Abs(B)*D) + (Abs(C)*D) \ \text{----------------}\ (4)$$

$$Lost\ Opportunity = 500*10 + 500*20 + 500*5$$

Consequently, the PWO lost opportunity of the process plant is: 5000+10000+2500 = $17500.

The above is an example which shows the use of discrete limits instead of using a difference of ideal and real limit as depicted in equation 2, to calculate the lost opportunity of the process plant.

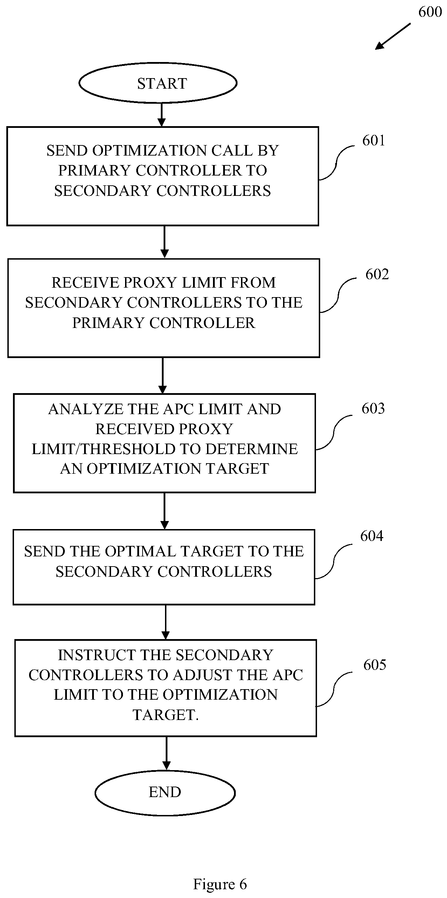

**Figure 6** illustrates a method of communication between the primary controller 402 and the secondary controllers 404, 406, 408 to optimize the working of the process plant according to this disclosure. The method depicted in Figure 6 is described as being performed in conjunction with the controllers 402, 404, 406, 408 illustrated in Figure 4A.

In operation 601, the primary controller 402 sends a call to the secondary controllers 404, 406, 408 embedded with individual APC units. This sending a call is to enable the secondary controllers 404, 406, 408 to send and receive messages with the primary controller 402. The primary controller 402 can control different sensors to perform readings of the CVs, MVs and store the readings with the secondary controllers 404, 406, 408. In turn, secondary controllers 404, 406, 408 records and store the proxy limit. The proxy limit identifies the physical constraints, optimal operating condition available with the CVs and the MVs of the respective APC unit.

In operation 602, the proxy limit stored with the secondary controllers 404, 406, 408 along with the APC limit is send to the primary controller 402 for further processing. The secondary controllers 404, 406, 408 cannot change the limit of the CVs and the MVs on their own.

In operation 603, the primary controller 402 receives the proxy limit from the secondary controllers 404, 406, 408. The process of receiving the proxy limit is a continuous process. After receiving the proxy limit, the primary controller 402 analyzes the proxy limit of the respective APC unit.

The primary controller 402, after analyzing, determines an optimal target for the secondary controllers 404, 406, 408. This optimal target is a new value at which the CVs and the MVs needs to adjust, for optimization of the process plant. The primary controller 402 has visibility and control of the process plant and therefore, alone can take this decision of determining an optimal target for the secondary controllers 404, 406, 408. The primary controller 402 sends the determined optimal target to each of the secondary controllers 404, 406, 408.

In operation 604, the secondary controllers 404, 406, 408 receive the optimal target and adjust the APC limit of their respective APC unit.

In operation 605, the secondary controllers 404, 406, 408 adjust to the received optimal target by changing the CVs and MVs of the process unit to the optimal target. This process of shifting to an optimal target by the APC limit helps the APC units in minimizing the lost opportunity.

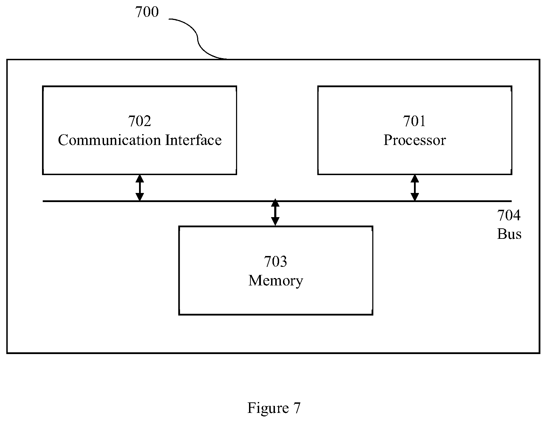

**Figure 7** illustrates a schematic diagram of another communication apparatus 700 according to an embodiment of the disclosure. The communication apparatus 700 includes a processor 701, a communication interface 702, and a memory 703. The processor 701, the communication interface 702, and the memory 703 may be connected to each other via a bus 704. The bus 704 may be a peripheral component interconnect (peripheral component interconnect, PCI) bus, an extended industry standard architecture (extended industry standard architecture, EISA) bus, or the like. The bus 704 may be classified into an address bus, a data bus, a control bus, and the like. For ease of representation, the bus is represented by using only one line in Figure 7, but it does not indicate that there is only one bus or one type of bus. The processor 701 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (Generic Array Logic, GAL), or any combination thereof. The memory 703 may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

The connecting lines shown in the various figures contained herein are intended to represent exemplary functional relationships and/or physical couplings between the various elements. It should be noted that many alternative or additional functional relationships or physical connections may be present in an embodiment of the subject matter.

The subject matter may be described herein in terms of functional and/or logical block components, and with reference to symbolic representations of operations, processing tasks, and functions that may be performed by various computing components or products. It should be appreciated that the various block components shown in the figures may be realized by any number of hardware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control products. Furthermore, embodiments of the subject matter described herein can be stored on, encoded on, or otherwise embodied by any suitable non-transitory computer-readable medium as computer-executable instructions or data stored thereon that, when executed (e.g., by a processing system), facilitate the processes described above.

Usually, various embodiments of this disclosure may be implemented by hardware or a dedicated circuit, software, logic, or any combination thereof. Some aspects may be implemented by the hardware, and other aspects may be implemented by firmware or software, and may be performed by a controller, a microprocessor, or another computing device. Although aspects of embodiments of this disclosure are shown and described as block diagrams, flowcharts, or some other figures, it should be understood that the blocks, apparatuses, systems, technologies, or methods described in this specification may be implemented as, for example, non-limiting examples, hardware, software, firmware, dedicated circuits or logic, general-purpose hardware or controllers or other computing devices, or a combination thereof.

This disclosure further provides at least one computer program product tangibly stored on a non-transitory computer-readable storage medium. The computer program product includes computer-executable instructions, such as instructions included in a program module, which are executed in a device on a real or virtual processor of a target, to perform the processes/methods described above with reference to the accompanying drawings. Usually, a program module includes a routine, a program, a library, an object, a class, a component, a data structure, or the like that performs a particular task or implements a particular abstract data type. In various embodiments, functions of the program module may be combined or a function of the program module may be as needed. Machine-executable instructions for the program module may be executed locally or within a distributed device. In the distributed device, the program module may be located in local and remote storage media.

Computer program code for implementing the method disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, a function/operation specified in the flowchart and/or the block diagram is implemented. The program code may be completely executed on a computer, partially executed on a computer, independently performed as a software package, partially executed on a computer and partially executed on a remote computer, or completely executed on a remote computer or a server.

In context of this disclosure, the computer program code or related data may be borne in any appropriate carrier, so that the device, the apparatus, or the processor can perform various processing and operations described above. An example of the carrier includes a signal, a computer-readable medium, and the like. An example of the signal may include propagating signals in electrical, optical, radio, sound, or other forms, such as carrier waves and infrared signals.

The computer-readable medium may be any tangible medium that includes or stores a program used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus, or device, or any suitable combination thereof. A more detailed example of the computer-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

The foregoing description refers to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements directly connected to one another, additional intervening elements, products, features, or components may be present in an embodiment of the depicted subject matter. In addition, certain terminology may also be used herein for the purpose of reference only, and thus are not intended to be limiting.

It may further be advantageous to set forth definitions of certain words and phrases used throughout this patent document. The terms "transmit," "receive," and "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The foregoing detailed description is merely exemplary in nature and is not intended to limit the subject matter of the application and uses thereof. Furthermore, there is no intention to be bound by any theory presented in the preceding background, brief summary, or the detailed description.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the subject matter in any way. Rather, the foregoing detailed description will provide those skilled in the art with a convenient road map for implementing an exemplary embodiment of the subject matter. It should be understood that various changes may be made in the function and arrangement of elements described in an exemplary embodiment without departing from the scope of the subject matter as set forth in the appended claims. Accordingly, details of the exemplary embodiments or other limitations described above should not be read into the claims absent a clear intention to the contrary.

**Claims**

1.  A method of enhancing an operation of a process plant, comprising:

    configuring a primary controller in the process plant to be connected to one or more secondary controllers in the process plant via conjoint variables, wherein the conjoint variables in the primary controller has a plant-wide optimizer (PWO) limit and the conjoint variables in the one or more secondary controllers has an advanced process control (APC) limit;
    sending, by the primary controller, at least one optimization call to the one or more secondary controllers;
    receiving a proxy limit from the one or more secondary controllers in response to the at least one optimization call, wherein the proxy limit is determined based on the APC limit and configured to notify the primary controller of a constraint and optimal operating condition available by the one or more secondary controllers;
    analyzing the APC limit and the received proxy limit from the one or more secondary controllers to determine an optimal target, wherein the optimal target is based on current operating conditions of the one or more secondary controllers;
    sending the optimal target to the one or more secondary controllers; and
    instructing the one or more secondary controllers to adjust the APC limit to the optimal target.

2. The method as claimed in claim 1, wherein the PWO limit and the APC limit are entered by an operator.

3. The method as claimed in claim 1, wherein the one or more secondary controllers manage individual APC units of the process plant.

4. The method as claimed in claim 3, wherein the individual APC units of the process plant are connected to the primary controller using the proxy limit, the conjoint variables, and the optimal target.

5. The method as claimed in claim 1, wherein the proxy limit of the one or more secondary controllers is obtained based on an ideal limit entered by an operator indicative of a preference for operation of the process plant.

6. The method as claimed in claim 1, wherein the proxy limit identifies operational constraints of the one or more secondary controllers.

7. The method as claimed in claim 1, wherein the conjoint variables, the APC limit, the PWO limit, the proxy limit, and an ideal proxy limit are utilized to compute the process plant wide lost opportunity.

8. The method as claimed in claim 1, further comprising obtaining a planning model for the process plant at the primary controller.

9. The method as claimed in claim 1, wherein the proxy limit identifies an extent to which one or more process variables controlled by the one or more secondary controllers are adjustable without violating a process variable constraint.

10. A system, comprising:

a primary controller in operative communication with one or more secondary controllers via conjoint variables, wherein the conjoint variables in the primary controller has a plant-wide optimizer (PWO) limit and the conjoint variables in the one or more secondary controllers has an advanced process control (APC) limit;
the primary controller comprising:

a memory; and
a processor configured to:

send at least one optimization call to the one or more secondary controllers;
receive a proxy limit from the one or more secondary controllers in response to the at least one optimization call, wherein the proxy limit is determined based on the APC limit and configured to notify the primary controller of a constraint and optimal operating condition available by the one or more secondary controllers;
analyze the APC limit and the received proxy limit from the one or more secondary controllers to determine an optimal target, wherein the optimal target is based on current operating conditions of the one or more secondary controllers;
send the optimal target to the one or more secondary controllers; and
instruct the one or more secondary controllers to adjust the APC limit to the optimal target.

11. The system as claimed in claim 10, wherein the one or more secondary controllers manage individual APC units of the process plant.

12. The system as claimed in claim 11, wherein the individual APC units of the process plant are connected to the primary controller using the proxy limit, the conjoint variables, and the optimal target.

13. The system as claimed in claim 10, wherein the proxy limit of the one or more secondary controllers is obtained based on an ideal limit entered by an operator indicative of a preference for operation of the process plant.

14. The system as claimed in claim 10, wherein the proxy limit identifies an extent to which one or more process variables controlled by the one or more secondary controllers are adjustable without violating a process variable constraint.

15. A non-transitory computer-readable medium having stored thereon computer-readable instructions that, when executed by a processor, cause the processor to execute a method of enhancing an operation of a process plant, comprising:

configuring a primary controller in the process plant to be connected to one or more secondary controllers in the process plant via conjoint variables, wherein the conjoint variables in the primary controller has a plant-wide optimizer (PWO) limit and the conjoint variables in the one or more secondary controllers has an advanced process control (APC) limit;

sending, by the primary controller, at least one optimization call to the one or more secondary controllers;

receiving a proxy limit from the one or more secondary controllers in response to the at least one optimization call, wherein the proxy limit is determined based on the APC limit and configured to notify the primary controller of a constraint and optimal operating condition available by the one or more secondary controllers;

analyzing the APC limit and the received proxy limit from the one or more secondary controllers to determine an optimal target, wherein the optimal target is based on current operating conditions of the one or more secondary controllers;

sending the optimal target to the one or more secondary controllers; and

instructing the one or more secondary controllers to adjust the APC limit to the optimal target.

Figure 1

Figure 2

TYPICAL REFINERY PRODUCTS

REFINERY FUEL GAS
LPG
REGULAR GASOLINE
PREMIUM GASOLINE
SOLVENTS
AVIATION FUELS
DIESELS
HEATING OILS
LUBE OILS
GREASES
ASPHALTS
INDUSTRIAL FUELS
REFINERY FUEL OILS
COKE

206

BLENDING COMPONENTS STRAIGHT-RUN PRODUCTS

STRAIGHT RUN OF BLENDING

VAPOR RECOVERY

REFORMATE

HYDRO TREATING

GASOLINE

ALKYLATION

FRACTIONATOR BOTTOMS
LUBE OILS
WAXES

GASOLINE, NAPHTHA AND MIDDLE DISTILLATES

202

REFORMING

210

CATALYTIC CRACKING

DEWAXING

GASOLINE, NAPHTHA, AND MIDDLE DISTILLATES
FUEL OIL
ASPHALT

HYDRO CRACKING

LT. GAS

GASOLINE, NAPHTHA, AND MIDDLE DISTILLATES

208

ISOMERIZATION

HYDRO TREATING

LGO

AROMATICS REDUCTION

PROPANE DEASPHALTER

VISBREAKER

DELAYED COKER

LPG AND GAS
STRAIGHT RUN GASOLINE
NAPHTHA
MIDDLE DISTILLATES
HVY ATMOS GAS OIL
VAC GAS OIL
LUBE BASE STOCKS

CRUDE UNIT STABILIZER SECTION

CRUDE UNIT ATMOS TWR SECTION

CRUDE UNIT VACUUM SECTION

CRUDE

204

200

Figure 3

400

**402**

PRIMARY CONTROLLER/PLANT WIDE OPTIMIZER

**404**

SECONDARY CONTROLLER/ ADVANCED PROCESS CONTROL

**408**

SECONDARY CONTROLLE R/ADVANCED PROCESS CONTROL

**406**

SECONDARY CONTROLLER/ ADVANCED PROCESS CONTROL

Figure 4A

422

424

406

420

408

412

414

416

418

404

410

Figure 4B

Figure 5

600

START

SEND OPTIMIZATION CALL BY
PRIMARY CONTROLLER TO
SECONDARY CONTROLLERS — 601

RECEIVE PROXY LIMIT FROM
SECONDARY CONTROLLERS TO THE
PRIMARY CONTROLLER — 602

ANALYZE THE APC LIMIT AND
RECEIVED PROXY
LIMIT/THRESHOLD TO DETERMINE
AN OPTIMIZATION TARGET — 603

SEND THE OPTIMAL TARGET TO THE
SECONDARY CONTROLLERS — 604

INSTRUCT THE SECONDARY
CONTROLLERS TO ADJUST THE APC
LIMIT TO THE OPTIMIZATION
TARGET. — 605

END

Figure 6

700

```
                    702                              701
           Communication Interface              Processor


                                                           704
                                                           Bus
                         703
                        Memory
```

Figure 7

Europäisches
Patentamt

European
Patent Office

Office européen
des brevets

# EUROPEAN SEARCH REPORT

**Application Number**

EP 25 18 9266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/132596 A1 (LU JOSEPH [US]) 6 May 2021 (2021-05-06) * abstract * * figures 1, 3A, 3C, 6, 11, 12, 13 * * paragraphs [0037] - [0178] * | 1-15 | INV. G05B13/04 |
| X | LU JOSEPH Z: "Closing the gap between planning and control: A multiscale MPC cascade approach", ANNUAL REVIEWS IN CONTROL, PERGAMON, AMSTERDAM, NL, vol. 40, 18 November 2015 (2015-11-18), pages 3-13, XP029325099, ISSN: 1367-5788, DOI: 10.1016/J.ARCONTROL.2015.09.016 * abstract * * figures 1-4 * * sections 3-4 * | 1-15 | |
| A | Mcbul S ET AL: "The process control journey: Advanced process control - Part 2", , 1 February 2024 (2024-02-01), XP093343693, Retrieved from the Internet: URL:https://read.nxtbook.com/gulf_energy_information/hydrocarbon_processing/february_2024/special_focus_mcbul_oq_specia.html [retrieved on 2025-12-04] * figure 5 * * page 6 * | 1-15 | **TECHNICAL FIELDS SEARCHED (IPC)** G05B |
| X | US 2021/263485 A1 (WEBB CHRISTOPHER J [US]) 26 August 2021 (2021-08-26) * abstract * * figures 1, 2, 7 * * paragraphs [0027] - [0105] * | 1-15 | |

-/--

The present search report has been drawn up for all claims

| Place of search | Date of completion of the search | Examiner |
|---|---|---|
| The Hague | 5 December 2025 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 18 9266

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/243319 A1 (VARTAK MANDAR [IN] ET AL) 8 August 2019 (2019-08-08)<br>* abstract *<br>* figures 1, 2A, 2B, 3 *<br>* paragraphs [0012] - [0092] *<br>----- | 1-15 | |
| A | Bhattacharya Jaideep: "CONTROL & OPTIMIZE Transforming Production Optimization",<br>,<br>7 June 2024 (2024-06-07), XP093343931,<br>Retrieved from the Internet:<br>URL:https://uop.honeywell.com/content/dam/uop/en-us/documents/aramco-innovation-day/hce/02-Control%20and%20Optimize%20-%20Aramco%20Innovation%20Day%20-%20Jaideep%20Bhattacharya.pdf<br>[retrieved on 2025-12-04]<br>* abstract *<br>* pages 9-26 *<br>----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 5 December 2025 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

EP 4 692 961 A1

## ANNEX TO THE EUROPEAN SEARCH REPORT
## ON EUROPEAN PATENT APPLICATION NO.

EP 25 18 9266

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2025

| Patent document cited in search report | Publication date | Patent family member(s) | Publication date |
|---|---|---|---|
| US 2021132596 A1 | 06-05-2021 | AU 2020260566 A1 | 20-05-2021 |
| | | EP 3816737 A1 | 05-05-2021 |
| | | US 2021132596 A1 | 06-05-2021 |
| US 2021263485 A1 | 26-08-2021 | NONE | |
| US 2019243319 A1 | 08-08-2019 | US 2019243319 A1 | 08-08-2019 |
| | | US 2021216050 A1 | 15-07-2021 |
| | | WO 2019152649 A1 | 08-08-2019 |

For more details about this annex : see Official Journal of the European Patent Office, No. 12/82